Europäisches Patentamt

European Patent Office

Office européen des brevets

(11) Publication number : **0 487 341 A1**

# (12) EUROPEAN PATENT APPLICATION

(21) Application number : 91310741.3

(22) Date of filing : 21.11.91

(51) Int. Cl.⁵ : **F15B 13/00, F16N 7/34, F16B 37/00**

(30) Priority : 23.11.90 GB 9025481

(43) Date of publication of application :
27.05.92 Bulletin 92/22

(84) Designated Contracting States :
AT BE CH DE DK ES FR GB IT LI NL SE

(71) Applicant : **Norgren Martonair Limited**
**PO Box 22 Eastern Avenue**
**Lichfield Staffordshire, WS13 6SB (GB)**

(72) Inventor : **Wates, Michael John**
**Orchard House, Stretton-on-Fosse**
**Morton in Marsh, Gloustershire GL56 9SF (GB)**

(74) Representative : **Lane, Michael John et al**
**IMI Plc, Patents and Licensing Department,**
**P.O. Box 216**
**Witton, Birmingham B6 7BA (GB)**

(54) Fluid control and conditioning units.

(57)   The respective body portions (3, 11) of a compressed air filter/regulator unit (1) and lubricator unit (2), through which the compressed air sequentially flows, are sealingly assembled together by two bolts (14, 14') that extend through respective through bores formed in the body portion (11). The respective heads (17, 17') of the two bolts (14, 14') are accommodated in counterbores (18, 18') formed in the body portion (11) and the threaded ends (19, 19') respectively of the bolts (14, 14') engage respective nuts (22, 22') held captive in blind bores (20, 20') formed in the body portion (3) of the filter/regulator unit (1). Intermediate the bolt heads (17, 17') and outer face (23) of the lubricator unit 11, the counterbores (18, 18') are traversed by slots (24, 24') in which square nuts may be located and held captive thereby permitting, if desired, a further control or conditioning unit to be connected to the assembly in the same manner as the unit 2 is connected to the unit 1.

Fig. 2

EP 0 487 341 A1

This invention relates to fluid control and conditioning units and especially, but not exclusively, to such units as are commonly used in compressed air lines.

Examples of units commonly used in compressed air lines are on/off valves, pressure regulators, filters and lubricators, the general nature of which will be familiar to those skilled in the art. Depending on the intended application of the compressed air in any given case, one, or more usually a combination of two or more such units through which the compressed air sequentially passes, may be required. Accordingly, a number of different proposals has been made over the years whereby units may be connected together, in any desired sequence, to give the desired combination. An example of a highly successful system is our OLYMPIAN (Registered Trade Mark) system in which the desired units are simply "plugged" into a specially designed supporting frame connected to the compressed air supply and delivery pipelines.

In an alternative known system individual units are connected together by means of bolts with the outlet port of one unit sealingly engaging the inlet port of the adjacent unit, and the present invention is particularly concerned with such a system. One problem with known bolted systems is that their flexibility is somewhat limited. Thus, in some prior systems the bolt heads protrude from an end (or opposed ends) of units in combination, which makes it impossible, where it might be desirable, to add a further unit (or units) to that end (or ends). Alternatively, means are simply not provided to add a further unit or units. It is an object of the present invention to provide a more flexible bolted system.

According to one aspect of the present invention, therefore, there is provided a fluid, eg compressed air, control or conditioning unit comprising:

a) a body portion having first and second opposed faces that each define, in part, a fluid inlet or outlet port,

b) said body portion having formed therein at least two through bores extending substantially perpendicularly to said opposed faces for receiving respective fixing bolts for connecting the unit to a second fluid control or conditioning unit in abutting relationship with said second face,

c) the end portion of each through bore adjacent to said first face being counterbored to provide a recess for fully accommodating the respective heads of said fixing bolts and to provide, at the transition between the bore and its counterbore, a shoulder for abutting its respective bolt head such that, when the bolt heads abut their respective shoulders, the shanks of the bolts will protrude from the second face to enable the unit to be secured to said second fluid control or conditioning unit, and

d) bolt engaging means located within the body portion adjacent to said first face for engaging the shanks of fixing bolts associated with a third fluid control or conditioning unit, whereby such third unit may be connected, in abutting relationship with the said first face, to the first-mentioned fluid control or conditioning unit.

It will thus be appreciated that, because the heads of the fixing bolts to be associated with the first-mentioned unit are fully accommodated in the respective recesses,they do not protrude from the end face of the unit thereby making it possible to add, if desired, a further fluid control or conditioning unit.

In a preferred embodiment, the bolt engaging means, of which there will be at least two, each comprises an appropriately screw-threaded member, eg a nut held captive, in use, in the body portion intermediate the bolt head and the first face of the unit. Alternatively, for example, the bolt engaging means could comprise threaded bores formed in the body portion, such bores being off-set from the through bores and extending into the body portion from the first face thereof.

According to a second aspect of the present invention there is provided, in combination for sequential fluid flow therethrough, first and second fluid control or conditioning units, said first unit comprising a unit as defined above in accordance with the first aspect of the invention and having located in said bore respective headed bolts the shanks of which protrude from the second face of the first unit and engage bolt engaging means eg. as described above, comprised in said second unit, the bolts being tightened so as to secure the second unit in abutting relationship with the second face of the first unit with the bolt heads engaging said shoulders and being fully accommodated within their respective recesses.

According to a third aspect of the present invention there is provided the combination as defined above connected to a third fluid control or conditioning unit, said third unit being secured, in abutting relationship, to the first face of the first unit by means of bolts engaged by said bolt engaging means located, adjacent to the first face, within the body portion of the first unit.

The invention will now be described in more detail, by way of example only, with reference to the accompanying drawings in which:

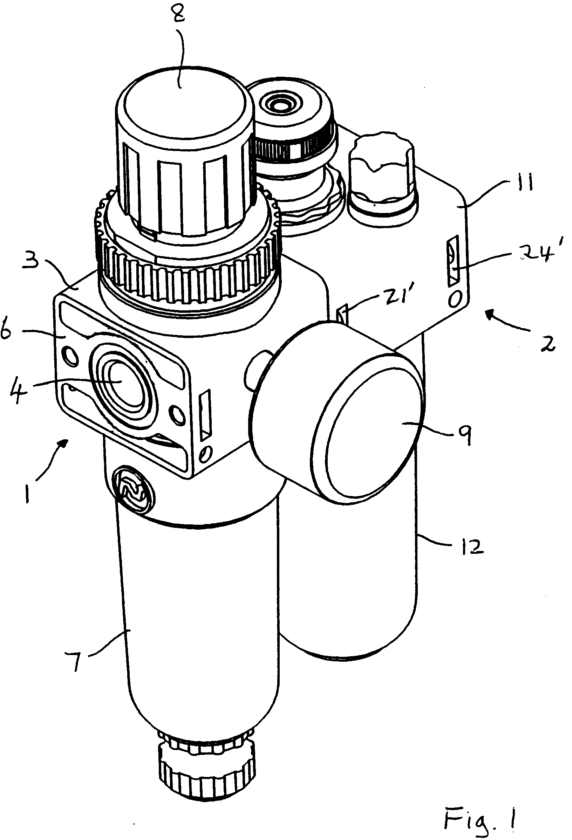

Fig 1 is a perspective view of a filter/regulator unit and lubricator unit combination in accordance with the invention of the general type commonly used in compressed air pipelines; and

Fig 2 is a cut-away perspective view of the combination shown in Fig 1 showing how the filter/regulator and lubricator units are bolted together and how a third control or conditioning unit may, if desired, be connected to the combination.

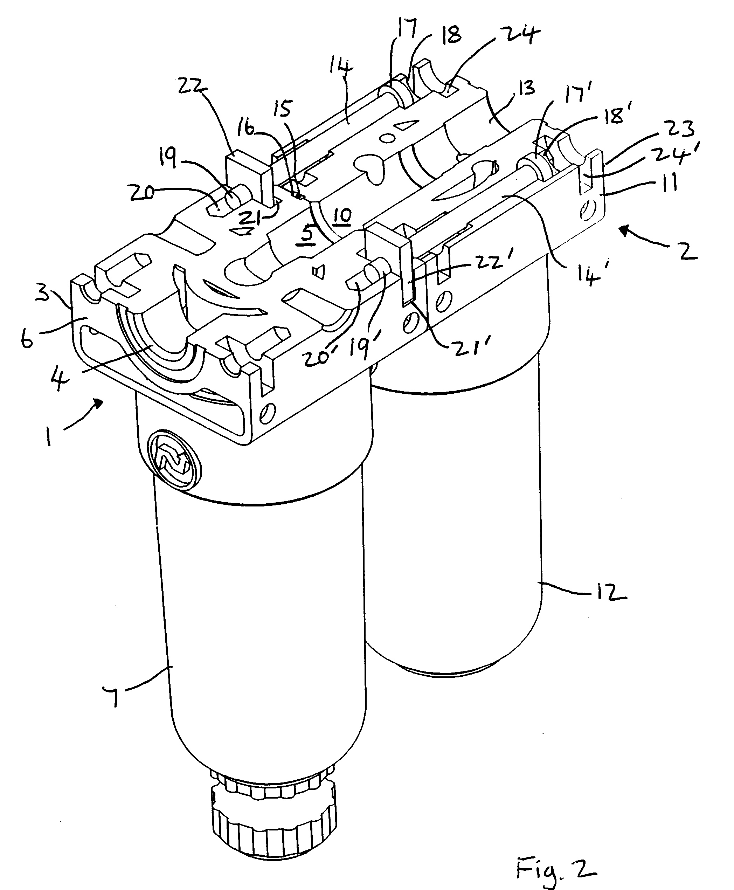

Referring to the drawings, the combination shown includes a unitary filter/pressure regulator unit 1 of generally well-known construction and a lubricator unit 2 also of generally well-known construction. The unit 1 comprises a body portion 3 provided with a compressed air inlet port 4 and an outlet port 5 (see Fig 2). In use, the inlet port 4 is connected to a compressed air supply pipeline (not shown) and for that purpose the port 4 may be threaded for threaded engagement with the pipeline. Alternatively, an end plate (not shown) may be bolted to the face 6 of the body portion 3, the end plate having a threaded hole through it in register with the port 4 for threaded engagement with the pipeline, in that case, an O-ring seal will normally be sandwiched between face 6 and the threaded plate so as to render the assembly fluid-tight.

In use, compressed air supplied through the aforesaid supply pipeline passes first through the filter section of the unit 1 that is disposed within a, usually transparent, bowl 7 depending from the body portion 3, whence it then passes through the regulator section of the unit 1, whereby the pressure of the compressed air is regulated to a value set by an adjusting knob 8 and indicated by a pressure gauge 9. The air exits from the unit 1 through the outlet port 5 and immediately enters the adjacent lubricator unit 2 via the latter's inlet port 10 (see Fig 2) formed in its body portion 11 whence it passes into a bowl 12 that depends from the body portion 11 and that contains a lubricant. The compressed air thus becomes lubricated with a fine lubricant mist and exits from the unit 2 via an outlet port 13.

The body portion 11 of the lubricator unit 2 is secured to the body portion 3 of the filter/regulator by means of a pair of bolts 14,14′, with the outlet port 5 of the unit 1 in register with inlet port 10 of the lubricator unit 2. An O-ring seal 15 is located in an annular cavity 16 defined by mating annular recesses formed respectively about the ports 5 and 10 in the mutually facing, engaged surfaces of the body portions 3 and 11; this serves to form a fluid tight seal between the units 1 and 2. As can be seen, the bolts 14,14′ are located in respective through bores formed in the body portion 11 of the lubricator unit 2. One end of each bolt is provided with a head, 17,17′ which is accommodated in a counterbore 18,18′. The heads 17,17′ engage respective annular shoulders formed at the transition between the bores and the counterbores 18,18′. The other ends 19,19′ of the bolts 14, 14′ are threaded and protrude from the body portion 11 into respective blind bores 20,20′ formed in the body portion 3 of the unit 1. The blind bores 20,20′ are traversed by respective slots 21,21′ which hold captive square nuts 22,22′ respectively and these engage the threaded ends 19,19′ respectively of the two bolts. Accordingly, by tightening the bolts 14,14′, the units 1 and 2 are brought into fluid-tight engagement with one another. In order to tighten the bolts, their heads may be slotted to receive a screwdriver or be formed with hexagonal recesses to receive an Allen Key, for example.

As can be seen, in the assembled state, the bolt heads 17,17′ are located significantly inwardly from the outer face 23 of the unit 2. Indeed, intermediate the bolt heads 17,17′ and the face 23, the counterbores 18,18′ are traversed by respective slot 24,24′ in which may be located square nuts (not shown) in the same manner as the nuts 22,22′ are located in the slots 21,21′. This permits a further control or conditioning unit to be connected, if desired, to the assembly described above in precisely the same manner as the unit 2 is connected to the unit 1. However, in the absence of such further unit, the outlet port 13 of the unit 2 would be connected to the delivery pipeline of the system (in like manner to the connection of the supply pipeline to the unit 1) which distributes the filtered, pressure-regulated, and lubricated compressed air to points of use.

## Claims

1. A fluid, for example compressed air, control or conditioning unit comprising:

   a) a body portion having first and second opposed faces that each define, in part, a fluid inlet or outlet port,

   b) said body portion having formed therein at least two through bores extending substantially perpendicularly to said opposed faces for receiving respective fixing bolts for connecting the unit to a second fluid control or conditioning unit in abutting relationship with said second face,

   c) the end portion of each through bore adjacent to said first face being counterbored to provide a recess for fully accommodating the respective heads of said fixing bolts and to provide, at the transition between the bore and its counterbore, a shoulder for abutting its respective bolt head such that, when the bolt heads abut their respective shoulders, the shanks of the bolts will protrude from the second face to enable the unit to be secured to said second fluid control or conditioning unit, and

   d) bolt engaging means located within the body portion adjacent to said first face for engaging the shanks of fixing bolts associated with a third fluid control or conditioning unit, whereby such third unit may be connected, in abutting relationship with the said first face, to the first-mentioned fluid control or conditioning unit.

2. A fluid control or conditioning unit according to claim 1 wherein the bolt engaging means each comprises a complementary female screw-threaded member held captive, in use, in said body portion intermediate the bolt head and said first face of the unit.

3. A fluid control or conditioning unit according to claim 2 wherein said female screw-threaded member is a nut.

4. A fluid control or conditioning unit according to claim 3 wherein the nut is held captive in a pair of opposed slots extending radially outwards from the wall defining said counterbore.

5. A fluid control or conditioning unit according to claim 4 wherein one of said slots extends wholly up to a side face of the body portion that lies in a plane substantially perpendicular to said first face whereby the nut may be located in position by insertion thereof through said side face.

6. A fluid control or conditioning unit according to claim 1 wherein the bolt engaging means each comprises a complementarily screw-threaded bore that is off-set from the through bores and that extends into the body portion from the first face thereof.

7. A fluid control or conditioning unit according to any one of claims 1 to 6 wherein the end portion of each through bore adjacent to said second face also is counterbored as aforesaid and wherein bolt engaging means is located within the body portion adjacent to said second face for engaging the shanks of fixing bolts associated with a another fluid control or conditioning unit, whereby such other unit may be connected, in abutting relationship with said second face, to the first-mentioned unit by means of said latter fixing bolts.

8. A fluid control or conditioning unit according to claim 7 wherein each of the bolt engaging means located adjacent to said second face is as specified in any of claims 2 to 6.

9. The combination, for sequential fluid flow therethrough, of first and second control or conditioning units for said fluid, said first unit comprising a unit as claimed in any one claims 1 to 8 and having located in each of said through bores a headed bolt the shank of which protrudes from the second face of said first unit and engages bolt engaging means comprised in said second unit, each bolt being tightened so as to secure the second unit in abutting, sealed relationship with the second face of said first unit with each bolt head engaging said shoulder and being fully accommodated within said recess.

10. A fluid control or conditioning unit or combination thereof as claimed in any one of claims 1 to 9 wherein the or each unit is selected from a pressure regulator, on/off valve, filter and lubricator.

Fig. 1

Fig. 2

European Patent
Office

**EUROPEAN SEARCH REPORT**

Application Number

EP    91 31 0741

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 051 861 (ELLISON ET AL)<br>* column 3, line 25 - column 5, line 14; claim 1; figures 1-4 * | 1-10 | F15B13/00<br>F16N7/34<br>F16B37/00 |
| X | FR-A-2 323 907 (PERRIER ET SES FILS ET MELCONIAN GUY)<br>* page 2, line 9 - page 3, line 22; claim 1; figure * | 1-10 | |
| A | FR-A-2 108 306 (C. A. NORGREN LIMITED)<br>* claims 1,4,5; figures 1,6 * | 1,9,10 | |
| | | | **TECHNICAL FIELDS SEARCHED (Int. Cl.5)**<br><br>F15B<br>F16N<br>F16B<br>H01H<br>H05K<br>F16K |

The present search report has been drawn up for all claims

| Place of search | Date of completion of the search | Examiner |
|---|---|---|
| THE HAGUE | 06 MARCH 1992 | CALAMIDA G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)